# EUROPÄISCHE PATENTSCHRIFT

(11) **EP 2 293 013 B1**
(45) Veröffentlichungstag und Bekanntmachung des Hinweises auf die Patenterteilung: **08.10.2014**
(21) Anmeldenummer: 10450139.0
(22) Anmeldetag: 02.09.2010
(51) Int. Cl.: G01S 7/481, G01C 15/00, G01S 17/89, G01S 17/10, G01S 17/42, G02B 26/12, G02B 5/09, G02B 26/10

(54) **3D-Laservermessungseinrichtung**
3D laser measuring device
Dispositif de mesure laser en 3D

(30) Priorität: 02.09.2009 AT 13822009
(43) Veröffentlichungstag der Anmeldung: 09.03.2011
(73) Patentinhaber: Riegl Laser Measurement Systems GmbH, 3580 Horn (AT)
(72) Erfinder: Riegl, Johannes, 3754 Trabenreith (AT); Reichert, Rainer, 3580 Horn (AT); Rieger, Peter, 3824 Grossau (AT)
(74) Vertreter: Weiser, Andreas

(56) Entgegenhaltungen:
- EP-A2- 0 797 072
- AT-B- 413 452
- DE-C1- 3 217 785
- US-A1- 2005 219 504

## Beschreibung

Die Erfindung bezieht sich auf eine 3D-Laesrvermessungseinrichtung gemäß dem Oberbegriff des Anspruchs 1 mit einem Laser-Entfernungsmesser, der einen Laser-Sender umfasst, der gepulste bzw. modulierte Laser-Strahlung aussendet. Sie umfasst ferner eine Empfangseinrichtung, welche die von Zielen reflektierte Strahlung empfängt. Dem Laser-Sender und der Empfangseinrichtung ist je ein optisches System, insbesondere ein Objektiv vorgeschaltet. Der Laserentfernungsmesser verfügt über eine Auswerteeinrichtung, durch welche aus der Laufzeit der Laserimpulse bzw. aus der Phasenlage der modulierten Laser-Strahlung die Distanz zwischen dem Laser-Entfernungsmesser und den Zielen ermittelt wird. Weiters ist eine Ablenkeinrichtung für die Sende- und Empfangsstrahlen vorgesehen, welche mindestens ein um eine Achse rotierendes Spiegelprisma, bzw. eine rotierende Spiegelpyramide umfasst, mittels welchem bzw. welcher der Zielraum mit einem Strahlenfächer abtastbar ist und die gesamte 3D-Vermessungseinrichtung relativ in Bezug auf den Zielraum translatorisch und im Wesentlichen normal zum Strahlenfächer bewegbar ist, so dass vom Zielraum ein 3D-Datensatz bzw. eine entsprechende Punktwolke erzeugt wird und zu jedem Messpunkt die Entfernung, der Ablenkwinkel und die geografischen Koordinaten sowie die räumliche Lage der 3D-Vermessungseinrichtung erfasst und in einem Datenspeicher abgelegt werden.

Eine 3D-Laservermessungseinrichtung mit einer regelmäßigen Spiegelpyramide ist aus der AT 413 452 B bekannt. Die DE 32 17 785 C1 und die US 2005/0219504 A1 offenbaren jeweils eine 3D-Laservermessungseinrichtung mit einem Laser-Sender zum Aussenden eines Sendestrahls auf ein Ziel und einer Ablenkeinrichtung für die Sende- und Empfangsstrahlen, die eine um eine Achse rotierbare Spiegelpyramide umfasst, mittels welcher ein Raum von Zielen mit zumindest einem Laserstrahlfächer abtastbar ist, wobei die Flächen der Spiegelpyramide mit der Rotationsachse zumindest zwei unterschiedliche Winkel einschließen.

Bilderfassungssysteme der eingangs genannten Art werden beispielsweise in Fluggeräten, wie Flächenflugzeugen, Hubschraubern oder auch in unbemannten Drohnen eingesetzt und dienen der Vermessung von mehr oder weniger großen Landstrichen. Als Ergebnis wird ein 3D-Datensatz bzw. ein digitales Oberflächenmodell generiert, welcher bzw. welches mit bekannten CAD-Programmen weiter bearbeitet werden kann. Die Ergebnisse dieser Vermessung sind nicht immer einfach zu interpretieren, da alle Elemente, die sich in der Richtung der Messstrahlen erstrecken, nicht deutlich wiedergegeben werden. So ist es beispielsweise relativ schwierig, in einem solchen Modell Hochspannungsmaste, Schornsteine oder auch Vertiefungen wie Gletscherspalten oder Lawinenabrisse auszumachen.

Um diese Schwierigkeiten zu vermeiden, ist bereits vorgeschlagen worden, mehrere gleichartige 3D-Vermessungseinrichtungen vorzusehen, die das Terrain unter unterschiedlichen Winkeln erfassen und die jeweiligen 3D-Datensätze bzw. Punktwolken zu einem einzigen Datensatz bzw. zu einer einzigen Punktwolke zu kombinieren, der bzw. die dann ein weitgehend abschattungsfreies Oberflächenmodell ergibt.

Eine solche Lösung weist aber nicht nur den Nachteil einer wesentlich höheren Investition auf, bei vielen Anwendungen, insbesondere bei airborne-Einsätzen, stellen auch das wesentlich höhere Gewicht und der deutlich höhere Energieverbrauch ein Problem dar.

Um dies zu vermeiden, wird vorgeschlagen, dass mindestens eine der Flächen der Spiegelpyramide sowie eine benachbarte Spiegelfläche mit der Rotationsachse unterschiedliche Winkel einschließen. Zumindest zwei Messstrahlenfächer tasten das Zielgebiet aus verschiedenen Winkeln zeilenförmig ab, wobei die Zeilen von Messpunkten, die sich aus den verschiedenen Winkeln der Spiegelflächen ergeben, in Richtung der translatorischen Bewegung der 3D-Vermessungseinrichtung versetzt sind und unter Berücksichtigung des Winkels der Spiegelflächen und den sich daraus ergebenden unterschiedlichen Aufnahmerichtungen sowie des Drehwinkels der Spiegelpyramide die Lage, Richtung und Länge des Messstrahles und damit die geografischen Koordinaten der Messpunkte im Zielraum definiert sind und die Gesamtheit der Messpunkte einen 3D-Datensatz bzw. eine Punktwolke repräsentieren, in welchem bzw. in welcher durch die verschiedenen Aufnahmerichtungen Abschattungen weitgehend vermieden sind.

Je nach Einsatz der 3D-Vermessungseinrichtung ergeben sich unterschiedliche Auslegungen insbesondere der Ablenkeinrichtung. So wird beispielsweise bei einer Vermessung aus geringer Flughöhe ein Strahlenfächer mit einem großen Winkel erforderlich sein, während bei einer Vermessung aus größerer Höhe Strahlenfächer mit einem vergleichsweise kleinen Winkel notwendig sind, um einen optimalen Abstand zwischen den Messpunkten zu erhalten. Um diese Bedingungen zu erfüllen, kann die Spiegelpyramide im ersteren Fall Spiegelflächen aufweisen, die einen großen Winkel überdecken. Bevorzugt werden zu diesem Zweck 3-seitige Pyramiden eingesetzt, während für Aufnahmen aus gröβerer Höhe Pyramiden mit einer wesentlich größeren Anzahl von Spiegelflächen zum Einsatz kommen. Parallel hierzu kann auch die Scan-Rate bzw. die Drehzahl der Spiegelpyramide dem jeweiligen Einsatz angepasst werden.

Um zu vermeiden, dass für jede dieser Anwendungen ein spezielles Gerät angeschafft werden muss, wird erfindungsgemäß vorgeschlagen, die 3D-Vermessungseinrichtung in ein Basisgerät und einen vom Basisgerät trennbaren, daran auswechselbar montierten Messkopf, der die Ablenkeinrichtung, insbesondere die Spiegelpyramide enthält, zu teilen.

Das Basisgerät und der Messkopf weisen je ein für die Laserstrahlung transparentes Fenster auf, die sich bei am Basisgerät montiertem Messkopf gegenüberliegen, so dass die Strahlung des im Basisgerät angeordneten Laser-Senders in den Messkopf eintreten und die von den Zielen reflektierte und im Messkopf abgelenkte Strahlung durch die beiden Fenster auf die im Basisgerät befindliche Empfangseinrichtung gelangen kann.

Vorzugsweise enthält der Messkopf die Lagerung, einen Antriebsmotor und einen Winkeldecoder für die Spiegelpyramide und ist über elektrische Steckverbindungen mit dem Basisgerät verbindbar.

In einer zweckmäßigen Ausführung schließen die Fenster das Basisgerät und den Messkopf dicht, insbesondere gasdicht ab und weisen eine optische Wirkung auf und wirken beispielsweise als Linsen bzw. Filter.

Vorteilhaft ist das vom Laser-Sendestrahl in den Empfangskanal durch Reflexionen etc. eingestreute Licht des Sendeimpulses von der Auswerteeinrichtung bezüglich der zeitlichen Lage des Impulses verarbeitbar und als Startsignal für die Zeitmessung zwischen Aussenden des Laserimpulses und Empfang der EchoImpulse nutzbar.

In einer anderen Variante der Erfindung werden die innerhalb einer vorgegebenen minimalen Zeitspanne eintreffenden Echoimpulse bei der Auswertung nicht berücksichtigt, wobei die minimale Zeitspanne so gewählt ist, dass im Bereich der 3D-Vermessungseinrichtung gestreutes Laser-Serdelicht mit Sicherheit bei der Zeitmessung ausgeklammert bleibt.

Zur Erzielung einer hohen Scan-Rate rotieren die Spiegelpyramiden mit einer sehr hohen Geschwindigkeit. Durch den unsymmetrischen Aufbau der Spiegelpyramide können Unwuchten entstehen, die im Betrieb zu Vibrationen führen könnten. Es ist daher günstig, die Spiegelpyramide zu wuchten. Zu diesem Zweck wird im Bereich der Basis und/oder der Deckfläche des Pyramidenstumpfes je ein Ring vorgesehen, welche Ringe zur insbesondere dynamischen Wuchtung lokal in ihrer Masse veränderbar sind.

Um Beschneidungen von Sende- bzw. Empfangskanal zu vermeiden, sind die Abstützungen des oben genannten Ringes an den Schnittkanten der Spiegelfacetten angeordnet.

Um die zur Empfangseinrichtung gelangende Energie der von den Zielen reflektierten Laserstrahlung zu optimieren, wird in einer vorteilhaften Ausgestaltung der Erfindung die optische Achse der Empfangseinrichtung in einer Normalebene zur Rotationsachse der Spiegelpyramide in Abhängigkeit von der Scan-Rate und/oder der jeweils gemessenen Entfernung verstellt.

Zu diesem Zweck ist zwischen der Empfangseinrichtung und der Spiegelpyramide ein schwenkbarer Spiegel vorgesehen, dessen Schwenkachse parallel zur Rotationsachse der Spiegelpyramide verläuft und dessen Antrieb den Spiegel in Abhängigkeit von der Scan-Rate und/oder der jeweils gemessenen Entfernung verschwenkt.

In einer anderen Variante der Erfindung ist die Empfangseinrichtung verschiebbar angeordnet, wobei der Verstellantrieb beispielsweise ein Piezo-Element umfasst.

Im Interesse einer optimalen Auslegung der einzelnen Spiegelflächen umfasst die Spiegelpyramide einen insbesondere metallischen Grundkörper und daran befestigte Spiegel, wobei der Grundkörper exakt positionierte, gegebenenfalls justierbare Aufnahmen für die einzelnen Spiegel aufweist.

Weitere Merkmale der Erfindung ergeben sich aus der anschließenden Beschreibung einiger Ausführungsbeispiele und unter Bezugnahme auf die Zeichnungen:
Fig. 1 zeigt schematisch eine konventionelle, flugzeuggestützte (airborne) 3D-Vermessungseinrichtung im Einsatz.
Fig. 2 veranschaulicht ebenfalls schematisch die verschiedenen Komponenten dieser Einrichtung.
Fig. 3 ist eine Prinzipdarstellung der erfindungsgemäßen Ablenkeinrichtung.

Die Fig. 4 und 5 zeigen Spiegelpyramiden mit unterschiedlichen optischen Systemen.

Die Fig. 6 und 7 sind zwei axonometrische Darstellungen einer Spiegelpyramide.

Die Fig. 8 und 9 veranschaulichen die konstruktive Ausbildung einer Variante der Erfindung.

Die Fig. 10 und 11 stellen Blockschaltbilder der erfindungsgemäßen Einrichtung dar.

In den Fig. 12 und 13 wird eine Variante einer Spiegelpyramide in zwei verschiedenen Ansichten gezeigt.

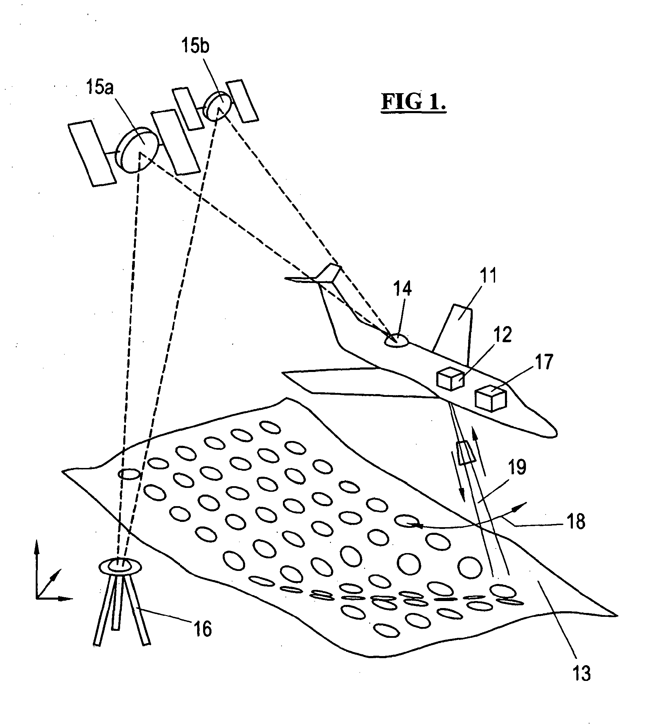

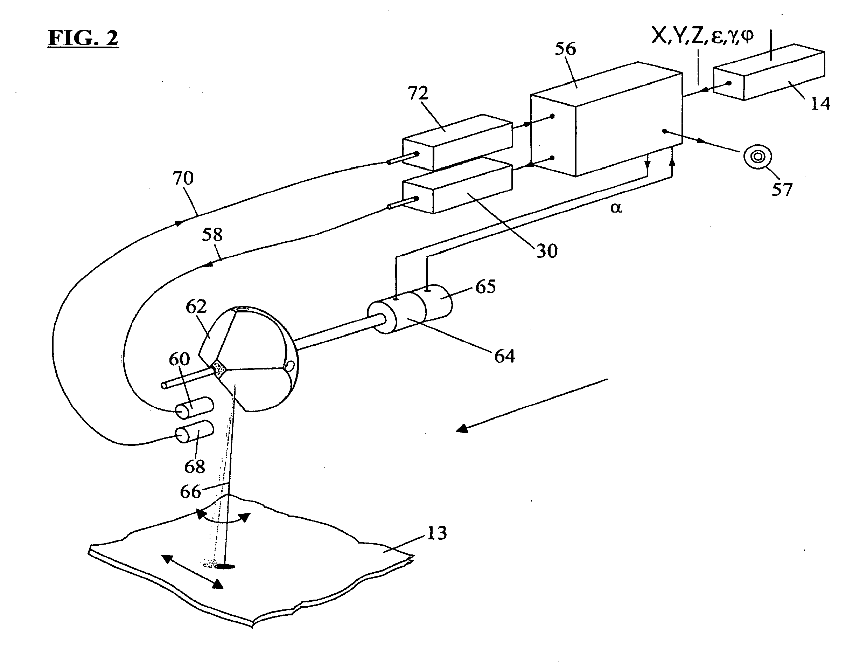

Die Fig. 1 und 2 zeigen als Stand der Technik ein Flächenflugzeug 11 mit einer eingebauten 3D-Vermessungseinrichtung 12. Diese umfasst einen Laser-Entfernungsmesser, der aus der Laufzeit (Time-of-Flight, ToF) der ausgesandten Laserstrahlung 19 die jeweilige Entfernung ermittelt. Die 3D-Vermessungseinrichtung verfügt ferner über eine Strahlablenkeinrichtung, welche die Laserstrahlen 19 normal zur Flugrichtung ablenkt, so dass das überflogene Terrain 13 mit einem Messstrahlenfächer 18 zeilenförmig abgetastet wird. Die jeweiligen geografischen Koordinaten des Flugzeuges 11 werden mit einem Satelliten-Navigationssystem (GPS) ermittelt. Zur Erzielung einer möglichst hohen Genauigkeit wird ein sogenanntes Differential-GPS eingesetzt, bei welchem das Navigationssystem nicht nur Signale von mehreren Satelliten 15a, 15b, ..., sondern auch von einer ortsfesten Station 16 empfängt. Zusätzlich zu den geografischen Koordinaten wird noch die Fluglage (Kurs-, Roll- und Nickwinkel) mittels eines Kreiselgerätes 17 gemessen. Alle diese Daten werden für jeden Messpunkt abgespeichert. In Verbindung mit der gemessenen Entfernung und dem Ablenkwinkel der Ablenkeinrichtung werden damit die geografischen Daten der Messpunkte ermittelt. In ihrer Gesamtheit ergeben diese einen 3D-Datensatz bzw. eine entsprechende Punktwolke des Terrains 13.

In der Fig. 2 ist schematisch der Aufbau eines solchen flugzeuggestützten Laser-Scanners gezeigt. Kernstück der Anlage ist ein Zentralrechner 56, der die einzelnen Komponenten ansteuert und die vom Entfernungsmesser gelieferten Entfernungswerte mit den Scan-Winkeln, den geografischen Koordinaten und den Fluglage-Winkeln verknüpft und diese Dateien aufzeichnet. Die Ausgabe der Datensätze kann über einen Datenträger 57, z.B. eine DVD, erfolgen.

Der Zentralrechner 56 steuert einen Lasertransmitter 30 an, der entsprechende Laser-Impulse aussendet. Die Laser-Strahlung wird durch ein Glasfaserkabel 58 einer Optik 60 zugeführt. Durch die rotierende Spiegelpyramide 62 wird der Laserstrahl nach unten und quer zur Flugrichtung abgelenkt. In ihrer Gesamtheit bilden die Messstrahlen einen Strahlenfächer, der das Gelände 13 zeilenartig abtastet. Angetrieben wird die Spiegelpyramide durch einen Motor 64, der durch den Zentralrechner 56 gesteuert wird. Durch einen auf der Motorwelle angeordneten Winkeldecoder 65 wird die Momentanstellung der Spiegelpyramide 62 an den Rechner 56 zurückgemeldet. Die vom Zielraum reflektierte Laser-Strahlung wird durch die Spiegelpyramide 62 auf ein Objektiv 68 umgelenkt und über ein Glasfaserkabel 70 der Empfangsstufe 72 zugeführt. Die in der Empfangsstufe in elektrische Signale umgewandelten Echoimpulse werden dem Rechner 56 zugeführt. Aus der Laufzeit (ToF) der Impulse werden die entsprechenden Entfernungswerte berechnet. Diese Daten werden mit den vom Winkeldecoder 65, vom DGPS 14 und dem Kreiselgerät 17 gelieferten Daten verknüpft. Durch diese Daten werden die geografischen Koordinaten jedes Messpunktes definiert, so dass aus den entsprechenden Datensätzen 3D-Geländemodelle berechnet werden können.

Wie bereits eingangs erwähnt, weisen solche Bilderfassungssysteme den Nachteil auf, dass es bei der Aufzeichnung zu Abschattungen kommt, so dass vertikal verlaufende Flächen oder auch bestimmte Bauwerke wie Schornsteine, Türme und Hochspannungsmaste sowie Spalten und Klüfte schwer zu interpretieren sind.

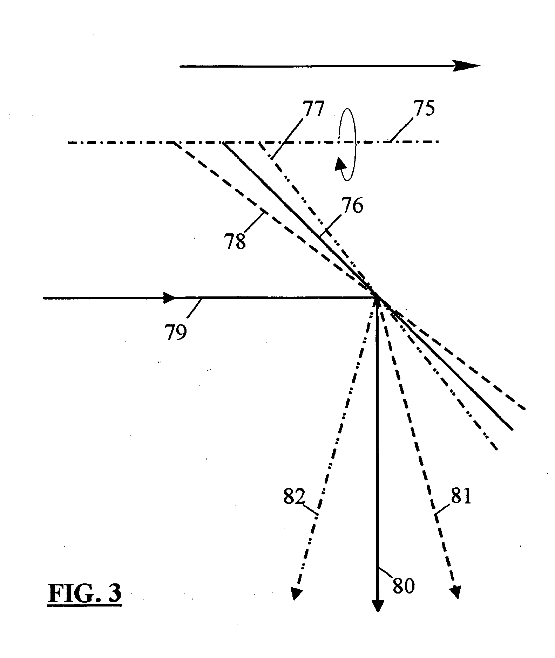

Diese Probleme werden dadurch vermieden, dass Messungen in mindestens 2 Richtungen durchgeführt werden, beispielsweise senkrecht nach unten und nach vorne und/oder nach hinten. Zu diesem Zweck wird die Spiegelpyramide mit Spiegelflächen ausgeführt, die mit der Rotationsachse unterschiedliche Winkel einschließen. In Fig. 3 ist dieses Prinzip schematisch gezeigt: die Rotationsachse der Spiegelpyramide ist mit 75 bezeichnet, 3 Spiegelflächen mit 76 bis 78. Die Spiegelfläche 76 schließt mit der Rotationsachse einen Winkel von 45° ein, 77 einen größeren, 78 einen entsprechend kleineren Winkel. Der Laserstrahl 79 wird an der Spiegelfläche 76 um 90° nach unten gelenkt (Pos. 80). Durch die Spiegelfläche 78 wird der Messstrahl 81 nach vorne abgelenkt, durch die Fläche 77 nach hinten (Pos. 82). Bei Einsatz einer 3-seitigen Spiegelpyramide wird bei einer Umdrehung derselben somit ein nach vorne, ein senkrecht nach unten und ein nach hinten gerichteter Strahlenfächer erzeugt.

Es ist zu beachten, daß der hier verwendete Begriff "Pyramide" jeweils sowohl spitze als auch stumpfe Pyramiden ("Pyramidenstumpfe") und mit diesen äquivalente Formen, wie Prismen mit geneigten Seiten, umfaßt.

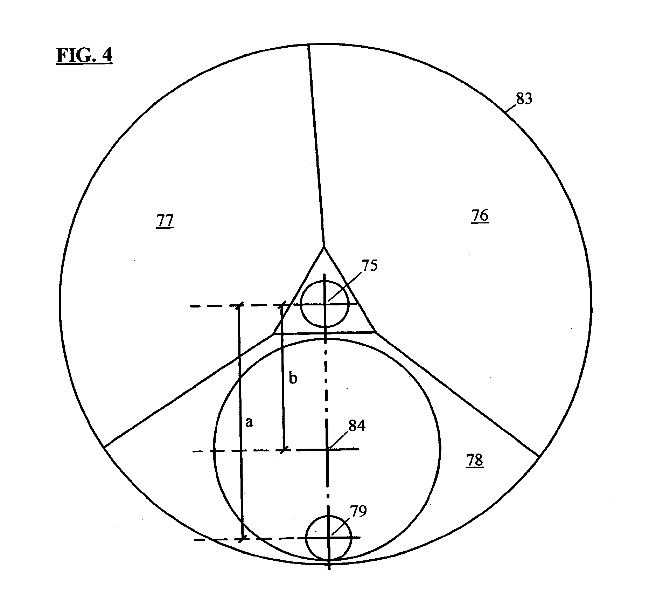

In Fig. 4 ist eine solche Spiegelpyramide 83 in einer Projektion in Richtung der Rotationsachse 75 dargestellt. Aus fertigungstechnischen Gründen weisen die einzelnen Flächen 76 bis 78 unterschiedliche Umfangswinkel auf. In dieser Figur sind auch die Apertur des Laserstrahles 79 und die des Empfangsstrahles 84 dargestellt. Die optische Achse des Lasersendestrahls weist einen wesentlich größeren radialen Abstand a von der Rotationsachse 75 auf als der radiale Abstand b der optischen Achse des Empfangsstrahles. Durch diese Maßnahme ergibt sich eine deutlich verbesserte Effizienz des Gesamtsystems.

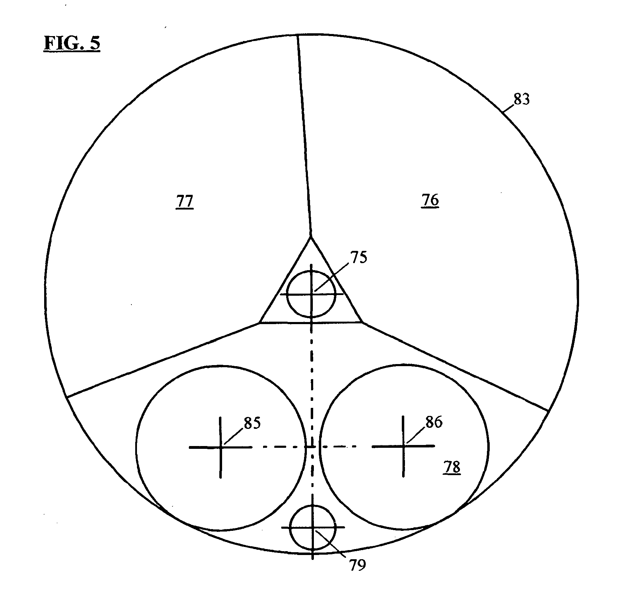

Die Fig. 5 zeigt eine Variante zu der in der Fig. 4 dargestellten Konstruktion. Die Spiegelpyramide 83 ist in beiden Abbildungen gleich. Der Empfangsstrahl ist aber in zwei Strahlen 85 und 86 gesplittet, wodurch sich im Betrieb ein etwas günstigerer Verlauf der Energie der reflektierten Laserstrahlung ergibt, welche die Empfangstufe trifft.

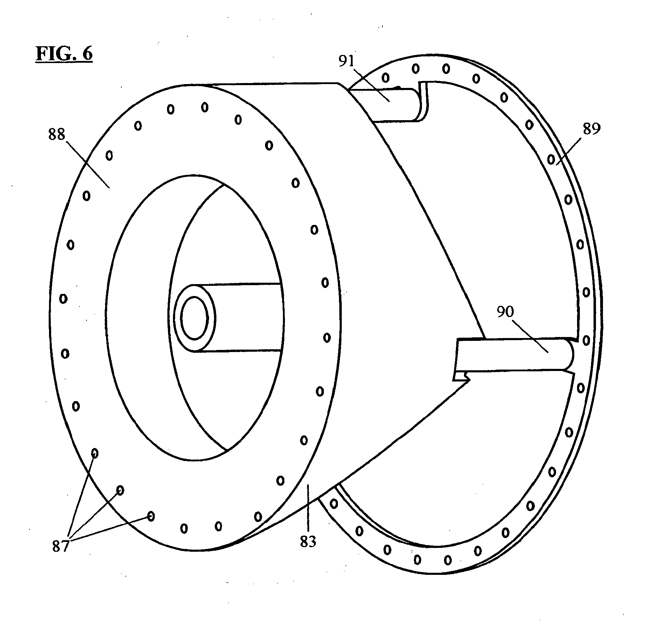

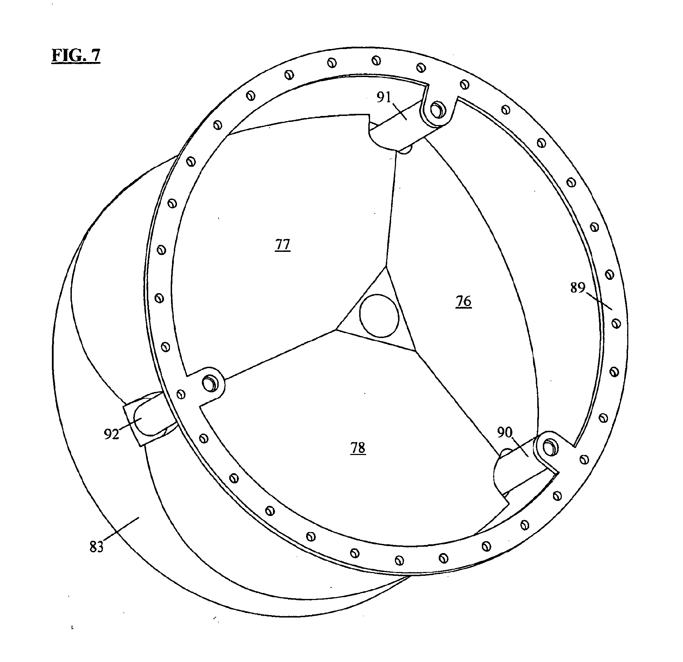

In den Fig. 6 und 7 wird in 2 verschiedenen Ansichten eine 3-seitige Spiegelpyramide 86 gezeigt. Der Körper der Pyramide besteht aus Metall, beispielsweise aus Aluminium oder Magnesium bzw. aus entsprechenden Legierungen. Durch die unsymmetrische Ausbildung der Pyramide ergibt sich eine ungleiche Massenverteilung, die speziell bei hohen Drehzahlen zu störenden Vibrationen führen kann. Es ist daher günstig, die Spiegelpyramide dynamisch zu wuchten. Zu diesem Zweck sind in der Basisfläche 88 der Pyramide 83 eine Vielzahl von Bohrungen 87 vorgesehen, in welche entweder Gewichte eingefüllt werden können, z.B. Bleigewichte eingepresst, oder welche zur lokalen Gewichtsreduktion aufgebohrt werden. Solche Ausgleichsgewichte werden alternativ oder zusätzlich auch in einer weiteren, im axialen Abstand von der ersten Ebene angeordneten zweiten Ebene vorgesehen, u.zw. bevorzugt in Form eines Ringes 89, der mit Stützen 90 - 92 an der Spiegelpyramide 83 befestigt ist. Der Ring 89 besitzt ebenfalls eine Vielzahl von Bohrungen 87, welche zur Wuchtung individuell aufbohrbar oder mit Gewichten füllbar sind. Die Stützen 90 - 92 sind, um Abschattungen nach Möglichkeit zu reduzieren, in der Verlängerung bzw. ausgehend von den Pyramidenkanten angeordnet.

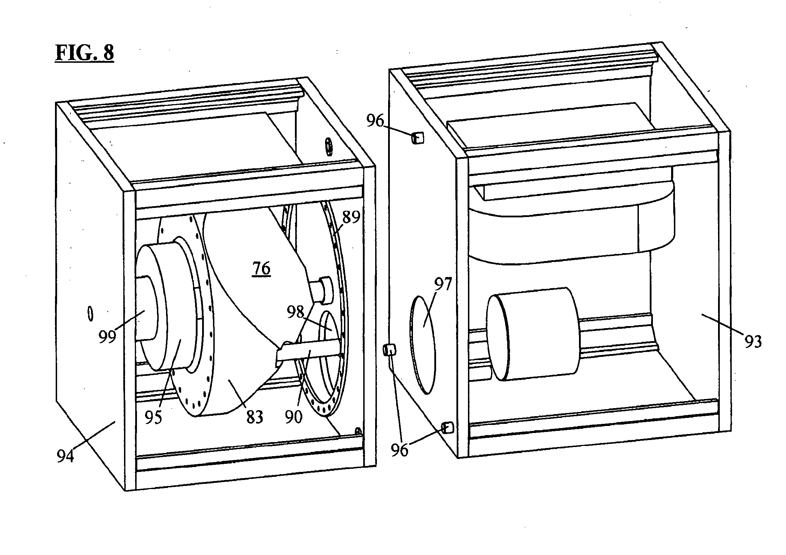

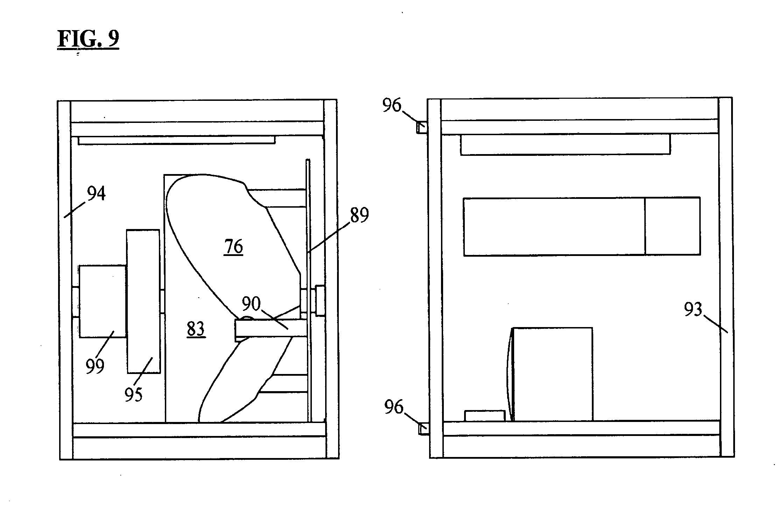

In den Fig. 8 und 9 ist eine 3D-Vermessungseinrichtung gezeigt, bei welcher die Ablenkeinrichtung mit der rotierenden Spiegelpyramide 83 in einem vom Basisgerät 93 trennbaren Messkopf 94 angeordnet ist. Der Messkopf 94 umfasst die rotierende Spiegelpyramide 83 mit der Lagerung, dem zugehörigen Antriebsmotor 95, sowie einen Winkeldecoder 99. Der Messkopf 94 ist mit einem nicht dargestellten Vielfachstecker mit dem Basisgerät 93 verbunden und wird von einem im Basisgerät 93 angeordneten Zentralrechner gesteuert. Vom Winkeldecoder 99 im Messkopf wird der jeweilige Drehwinkel an den Rechner zurückgemeldet. Im Basisgerät 93 ist neben dem Zentralrechner auch der Laserentfernungsmesser samt der zugehörigen Auswerteeinrichtung untergebracht.

Mit Passstiften 96 wird der Messkopf 94 am Basisgerät 93 orientiert. Die beiden Komponenten 93 und 94 weisen je ein Fenster 97 und 98 auf, die im montierten Zustand miteinander fluchten. Die Fenster 97 und 98 können eine optische Wirkung aufweisen und eine Filterfunktion und/oder eine entsprechende Brechkraft besitzen. Durch die Teilung der 3D-Vermessungseinrichtung in zwei wechselbare Komponenten ist es möglich, diese an die unterschiedlichen Anforderungen der verschiedenen Messeinsätze anzupassen. So wird bei flugzeuggestützten Anwendungen bei geringen Flughöhen mit Vorteil eine 3- oder 4-seitige Spiegelpyramide eingesetzt, bei größeren Flughöhen hingegen eine 6-oder 8-seitige. Die Motordrehzahl muss ebenfalls dem jeweiligen Einsatzfall angepasst werden. Es können auch Spiegelpyramiden mit anderen Flächenwinkeln eingesetzt werden.

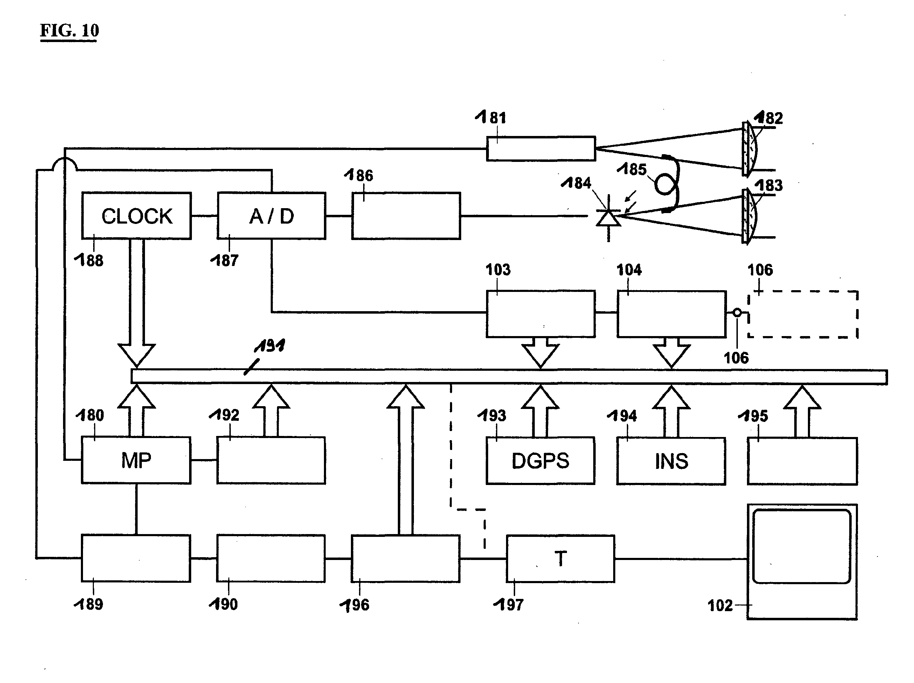

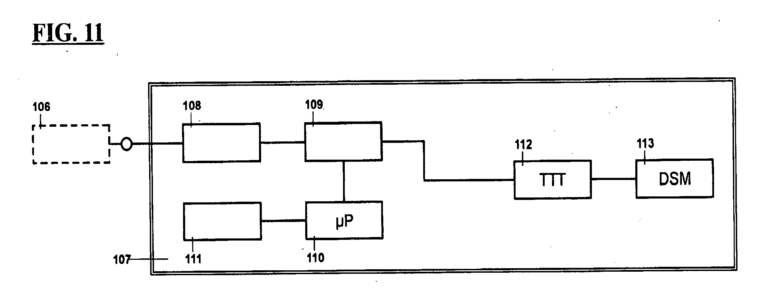

Die Funktion eines Ausführungsbeispieles wird an Hand der Blockschaltbilder einer flugzeuggestützten (airborne) 3D-Vermessungseinrichtung gemäß den Fig. 10 und 11 näher erläutert:

Die Fig. 10 veranschaulicht schematisch einen Laserentfernungsmesser, wie er in der erfindungsgemäßen Einrichtung eingesetzt ist. In dem Blockschaltbild nicht dargestellt ist die Strahlablenkeinrichtung, durch welche der Laserstrahl abgelenkt und das Zielgebiet zeilenförmig abgetastet wird. Gesteuert wird der Laserentfernungsmesser und die gesamte 3D-Vermessungseinrichtung durch einen Mikro-Prozessor (µP) 180. Der Entfernungsmesser umfasst einen Laser-Sender 181, welcher auf einen Startimpuls des µP 180 einen Laserimpuls aussendet. Die Laserstrahlung wird durch ein Objektiv 182 auf eine vorgewählte Entfernung fokussiert. Die von im Zielgebiet befindlichen Objekten reflektierte Strahlung wird durch ein Objektiv 183 auf eine lichtempfindliche Diode 184, beispielsweise eine Avalanche-Diode, konzentriert. Durch einen Lichtleiter 185 wird ein kleiner Anteil der vom Laser 181 ausgesandten Strahlung direkt der Empfangsdiode 184 zugeführt. Dieser im Wesentlichen gleichzeitig mit der Aussendung des Laserimpulses empfangene Impuls dient bei der Ermittlung der Pulslaufzeit (Time-of-Flight, ToF) und damit der Entfernung als Startsignal für die Zeitmessung. Das Ausgangssignal der Empfangsdiode 184 wird in einem Verstärker 186 verstärkt und gegebenenfalls gefiltert und schließlich in einem A/D-Wandler 187 digitalisiert. Getaktet wird der A/D-Wandler 187 und auch der µP 180 von einem Puls- bzw. Clock-Generator 188. Ausgangssignale des A/D-Wandlers 187 werden einer Zählstufe 189 zugeführt, in welcher die Anzahl der Taktimpulse zwischen dem Startimpuls und dem Empfangsimpuls ermittelt wird. Aus der Pulszahl wird in der Stufe 190 die ToF und in weiterer Folge die Entfernung zwischen dem Entfernungsmesser und dem Ziel ermittelt. Der auf diese Weise berechnete Entfernungswert weist allerdings eine relativ geringe Genauigkeit auf. Ein Vorteil dieser Strategie ist aber auf der anderen Seite, dass der Rechenaufwand sehr gering und damit auch die Rechenzeit minimal ist, so dass der Entfernungsmesser mit einer sehr hohen Taktrate betrieben werden kann.

Der µP 180 kommuniziert mit den anderen Komponenten des Systems über einen Datenbus 191. Die zum Betrieb des µPs 180 erforderlichen Software ist in dem Programmspeicher 192 abgelegt.

Da durch den Laserentfernungsmesser in Verbindung mit der Ablenkeinrichtung das Zielgebiet nur 2-dimensional erfasst wird, ist es für die Aufnahme eines 3D-Bildes erforderlich, die 3D-Vermessungseinrichtung translatorisch über das Zielgebiet zu bewegen. Dazu ist es notwendig, sämtliche Freiheitsgrade des jeweiligen Messstrahles im Raum mit hoher Genauigkeit zu definieren. Zur Erfassung der geografischen Koordinaten x, y und z sowie des Kurswinkels ω dient ein satellitengestützes Navigationssystem GPS. Wird neben den verschiedenen Satelliten eine ortsfeste, terrestrische Station zur Messung herangezogen, so kann eine extrem hohe Genauigkeit erzielt werden. (Differential GPS - DGPS, Block 193).

Die 3D-Vermessungseinrichtung kann im Fluggerät beispielsweise auf einer kreiselstabilisierten Plattform angeordnet sein, im Allgemeinen ist es jedoch zweckmäßiger, den Rollwinkel ϕ, den Pitchwinkel Θ und Flugpfadwinkel y von einem Kreiselgerät (INS) 194 abzuleiten. Die Lage des Messstrahles wird ferner durch die Strahlablenkeinrichtung definiert, und zwar bei der erfindungsgemäßen Einrichtung in zwei verschiedenen Richtungen: weist beispielsweise die zur Strahlablenkung eingesetzte rotierende Spiegelpyramide, wie in Fig. 3 schematisch dargestellt, drei Flächen auf, die jeweils einen anderen Winkel mit der Rotationsachse einschließen, so wird je nach dem entsprechenden Winkelsektor ein Abtastfächer nach hinten, senkrecht nach unten oder nach vorne gerichtet sein. Den Strahlwinkel innerhalb des Abtastfächers bestimmt der exakte Drehwinkel α der Spiegelpyramide. Der jeweilige Drehwinkel α wird durch einen auf der Rotationsachse der Spiegelpyramide angeordneten Winkeldecoder 195 gemessen, durch den µP 180 werden die Fächerwinkel und die Strahlwinkel innerhalb der Fächer ermittelt.

In der Stufe 196 werden die geografischen Koordinaten der Messeinrichtung und die verschiedenen Winkel mit den gleichzeitig gemessenen Entfernungswerten verknüpft und daraus die geografischen Koordinaten der einzelnen Messpunkte ermittelt. Diese Daten werden in einem Datenspeicher 197 abgelegt. Der Speicher 197 kann mit einem PC verbunden werden, auf dessen Monitor 102 dann on-line das vermessene Terrain in einer Vorausschau an Bord des Luftfahrzeuges auf Vollständigkeit etc. kontrolliert werden kann.

Der vom A/D-Wandler 187 kommende Strom von Abtastimpulsen wird der Stufe 103 zugeleitet, in welcher jeder Einzelmessung des Entfernungsmessers die zugehörigen Koordinaten der Messeinrichtung und die entsprechenden Winkeldaten zugeordnet werden. Die auf diese Weise erzeugten Datensätze werden in einem Speicher 104 abgelegt und können über eine Schnittstelle 105 zu einer off-line Verarbeitung mit hoher Genauigkeit auf einen externen Datenträger 106 übertragen werden.

Diese off-line Verarbeitung kann mit einer elektronischen Recheneinheit 107 durchgeführt werden, deren Blockschaltbild schematisch in der Fig. 11 dargestellt ist. Die Recheneinheit 107 umfasst einen ersten Datenspeicher 108, in welchen die vom Datenträger 106 kommenden Daten abgespeichert werden. In der Stufe 109 wird aus den Abtastimpulsen unter Berücksichtung der Impuls-Form und -Amplitude die zeitliche Lage des entsprechenden Pulses in Bezug auf den Abtaster ermittelt. In der Stufe 112 wird aus diesen Daten mit hoher Genauigkeit die Zeitdifferenz zwischen Start- und Echoimpuls und damit die Entfernung zu dem betreffenden Ziel berechnet. Aus diesem Entfernungswert, den geografischen Koordinaten der Messeinrichtung und den zugehörigen Winkelwerten werden die geografischen Koordinaten der Objekte im Zielgebiet definiert. In ihrer Gesamtheit beschreiben die entsprechenden Messpunkte einen 3D-Datensatz bzw. eine Punktwolke. Da der Datensatz bzw. die entsprechende Punktwolke auf Messungen aus verschiedenen Richtungen basieren, ist das resultierende Entfernungsbild weitgehend frei von Abschattungen. Die entsprechenden Berechnungen erfolgen durch einen µP 110, dessen Programmspeicher mit 111 bezeichnet ist.

Aus den in der Stufe 112 berechneten Daten kann ein digitales Oberflächenmodell (Digital Surface Model, DSM) 113 generiert werden, welches mit bekannten Programmen weiter bearbeitet werden kann.

Stehen Rechner mit sehr hoher Leistungsfähigkeit und hoher Rechengeschwindigkeit zur Verfügung, kann die hochpräzise Datenverarbeitung bereits on-line an Bord des Luftfahrzeuges erfolgen, ohne eine reduzierte Messrate in Kauf nehmen zu müssen. In diesem Fall erübrigt es sich, für die Vorschau zur Kontrolle des Messvorganges einen eigenen Datensatz zu generieren.

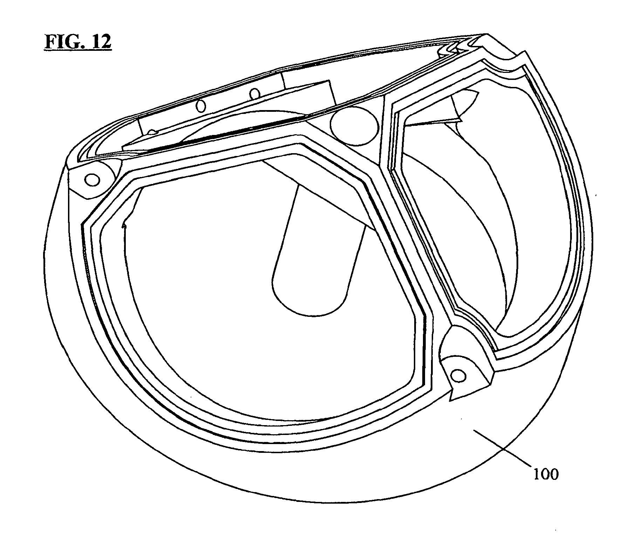

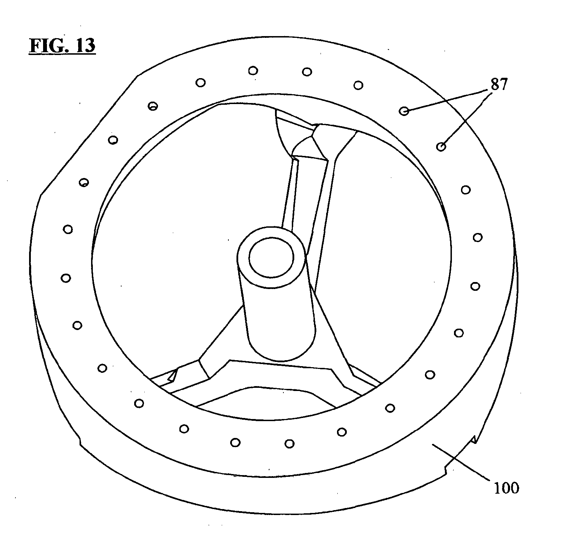

In den Figuren 12 und 13 wird eine Variante zur Spiegelpyramide 83 gezeigt.

Sie besteht aus einer Grundstruktur 100 aus Metall, insbesondere Aluminium oder Magnesium, aus Keramik oder faserverstärktem Kunststoff. Auf dieser Grundstruktur 100 werden Planspiegel befestigt. Die Spiegel können aufgeklebt oder mit der Grundstruktur 100 verschraubt sein. Es kann zweckmäßig sein, die Auflagerpunkte der Spiegel justierbar auszuführen. Diese Konstruktion ist besonders geeignet für irreguläre Spiegelpyramiden bzw. Spiegelprismen mit unterschiedlichen Facettenwinkeln und/oder einer großen Facettenzahl.

Die Erfindung ist nicht auf die oben beschriebenen Ausführungsbeispiele beschränkt, sondern kann in verschiedener Weise modifiziert werden. So kann anstelle des oben beschriebenen Entfernungsmessers mit Laserimpulsen ein Entfernungsmesser eingesetzt werden, welcher einen modulierten Laserstrahl aussendet, wobei die Laufzeit aus der Phasenlage zwischen dem ausgesandten und dem Echosignal ermittelt wird. Anstelle der oben gezeigten Ablenkeinrichtung mit einer Spiegelpyramide kann auch eine solche mit einem Spiegelprisma eingesetzt werden.

In der obigen Beschreibung verschiedener Ausführungsbeispiele wird immer wieder von flugzeuggestützten 3D-Vermessungseinrichtungen ausgegangen. Diese Einrichtungen können aber mit den gleichen Vorteilen in Landfahrzeugen, beispielsweise in schienengebundenen Fahrzeugen zur Anwendung kommen. Vorteile ergeben sich auch beim Einsatz auf Schiffen oder Booten, zur Vermessung von Wasserstraßen und Küstenverläufen.

## Patentansprüche

1. 3D-Laservermessungseinrichtung (12), mit
einem Laser-Entfernungsmesser, der einen Laser-Sender (30, 181) zum Aussenden eines Sendestrahls (19, 66) auf ein Ziel (13), eine Laser-Empfangseinrichtung (72, 184) zum Empfangen des vom Ziel reflektierten Empfangsstrahls (19, 66) und eine Auswerteeinrichtung (56, 107, 180) zur Strahl-Laufzeitmessung umfaßt, um daraus die Zielentfernung zu messen, und
einer Ablenkeinrichtung (62, 83, 100) für die Sende- und Empfangsstrahlen (19, 66), die eine um eine Achse (75) rotierbare Spiegelpyramide (62, 83, 100) umfasst, mittels welcher ein Raum von Zielen (13) mit zumindest einem Laserstrahlfächer (18) abtastbar ist, um aus den gemessenen Zielentfernungen eine 3D-Punktewolke (113) des Zielraums zu erstellen, wobei die Flächen (76-78) der Spiegelpyramide (62, 83, 100) mit der Rotationsachse (75) zumindest zwei unterschiedliche Winkel einschließen,
**dadurch gekennzeichnet, dass** die 3D-Laservermessungseinrichtung (12) in ein Basisgerät (93) und einen vom Basisigerät (93) trennbaren, daran auswechselbar montierten Messkopf (94) unterteilt ist, wobei das Basisgerät (93) den Laser-Entfernungsmesser (30, 181; 72, 184; 56, 107, 180) und der Messkopf (94) die Ablenkeinrichtung (62, 83, 100) enthält, und wobei das Basisgerät (93) und der Messkopf (94) je ein für die Laserstrahlen (19, 66) transparentes Fenster (97, 98) aufweisen, die im montierten Zustand miteinander fluchten.

2. 3D-Laservermessungseinrichtung nach Anspruch 1, **dadurch gekennzeichnet, dass** der Messkopf (94) ferner einen Antriebsmotor (95) und einen Winkeldecoder (99) für die Spiegelpyramide (62, 83, 100) enthält.

3. 3D-Laservermessungseinrichtung nach Anspruch 1 oder 2, dass die transparenten Fenster (97, 98) das Basisgerät (93) und den Messkopf (94) jeweils dicht abschließen, bevorzugt gasdicht.

4. 3D-Laservermessungseinrichtung nach Anspruch 3, **dadurch gekennzeichnet, dass** die Fenster (97, 98) eine optische Wirkung aufweisen, bevorzugt als Linsen oder Filter.

5. 3D-Laservermessungseinrichtung nach einem der Ansprüche 1 bis 3, **dadurch gekennzeichnet, dass** die Spiegelpyramide (62, 83, 100) in einem axialen Abstand von ihrer Basis (88) über Stützen (90-92) zumindest einen Ring (89) zur Wuchtung trägt.

6. 3D-Laservermessungseinrichtung nach Anspruch 5, **dadurch gekennzeichnet, dass** die Stützen (90-92) von den Pyramidenkanten ausgehen.

7. 3D-Laservermessungseinrichtung nach Anspruch 5 oder 6, **dadurch gekennzeichnet, dass** der Ring (89) mit einer Vielzahl von Bohrungen (87) versehen ist, welche zur Wuchtung individuell aufbohrbar oder mit Gewichten füllbar sind.

8. 3D-Laservermessungseinrichtung nach einem der Ansprüche 5 bis 7, **dadurch gekennzeichnet, dass** die Basis (88) der Spiegelpyramide (62, 83, 100) mit einer Vielzahl von Bohrungen (87) versehen ist, welche zur Wuchtung individuell aufbohrbar oder mit Gewichten füllbar sind.

9. 3D-Laservermessungseinrichtung nach einem der Ansprüche 1 bis 8, **dadurch gekennzeichnet, dass** die Spiegelpyramide (62, 83, 100) einen metallischen Grundkörper (100) mit Aussparungen aufweist, welche von Planspiegeln (76-78) überspannt sind.

10. 3D-Laservermessungseinrichtung nach Anspruch 9, **dadurch gekennzeichnet, dass** der Grundkörper (100) justierbare Aufnahmen für die Planspiegel (76-78) aufweist.

11. 3D-Laservermessungseinrichtung nach einem der Ansprüche 1 bis 10, **dadurch gekennzeichnet, dass** die optische Achse (79) des Laser-Sendestrahls (19, 66) einen größeren radialen Abstand (a, b) von der Rotationsachse (75) der Spiegelpyramide (62, 83, 100) aufweist als die optische Achse (84; 85, 86) des Empfangsstrahles (19, 66).

12. 3D-Laservermessungseinrichtung nach einem der Ansprüche 1 bis 11, **dadurch gekennzeichnet, dass** der Empfangsstrahl (19, 66) beim Auftreffen auf die Spiegelpyramide (62, 83, 100) in zwei Strahlen (85, 86) gesplittet ist.

13. 3D-Laservermessungseinrichtung nach einem der Ansprüche 1 bis 12, **dadurch gekennzeichnet, dass** die optische Achse der Empfangseinrichtung im Bereich zwischen der Spiegelpyramide und der Empfangseinrichtung in einer Normalebene zur Rotationsachse in Abhängigkeit von der Scan-Rate und/oder der jeweils gemessenen Zielentfernung verstellbar ist.

14. 3D-Laservermessungseinrichtung nach einem der Ansprüche 1 bis 13, **dadurch gekennzeichnet, dass** zwischen der Empfangseinrichtung und der Spiegelpyramide ein schwenkbarer Spiegel vorgesehen ist, dessen Schwenkachse parallel zur Rotationsachse der Spiegelpyramide verläuft, wobei ein Antrieb ihn in Abhängigkeit von der Scan-Rate und/oder der jeweils gemessenen Zielentfernung verschwenkt.

15. 3D-Laservermessungseinrichtung nach einem der Ansprüche 1 bis 14, **dadurch gekennzeichnet, daß** die Empfangseinrichtung verstellbar angeordnet ist und der Verstellantrieb bevorzugt ein Piezo-Element umfasst.

## Claims

1. 3D laser measurement apparatus (12), with
a laser distance meter, which comprises a laser emitter (30, 181) for emitting a sending beam (19, 66) onto a target (13), a laser reception unit (72, 184) for receiving a reception beam (19, 66) reflected by the target, and an evaluation unit (56, 107, 180) for measuring the beam runtime, to therefrom measure the target distance, and
a deflection unit (62, 83, 100) for the sending and reception beams (19, 66), which comprises a mirror pyramid which is rotatable about an axis (75), by means of which a space of targets (13) can be scanned with at least one laser beam fan (18), to generate a 3D point cloud (113) of the target space from the measured target distances, wherein the faces (76-78) of the mirror pyramid (62, 83, 100) are aligned towards the rotation axis (75) at at least two different angles,
**characterized in that** the 3D laser measurement apparatus (12) is grouped into a basic device (93) and a measuring head (94) which is separable from the basic device (93) and mounted interchangeably thereon, wherein the basic device (93) contains the laser distance meter (30, 181; 72, 184; 56, 107, 180) and the measuring head (94) contains the deflection unit (62, 83, 100), and wherein the basic device (93) and the measuring head (94) each have a window (97, 98) transparent for the laser beams (19, 66), which windows align in the mounted state.

2. 3D laser measurement apparatus according to claim 1, **characterized in that** the measurement head (94) further contains a drive motor (95) and an angular decoder (99) for the mirror pyramid (62, 83, 100).

3. 3D laser measurement apparatus according to claim 1 or 2, **characterized in that** the transparent windows (97, 98) each tightly close the basic device (93) and the measurement head (94), preferably gastightly.

4. 3D laser measurement apparatus according to claim 3, **characterized in that** the windows (97, 98) exhibit an optical property, preferably as lenses or filters.

5. 3D laser measurement apparatus according to any one of the claims 1 to 3, **characterized in that** the mirror pyramid (62, 83, 100) carries a ring (89) for balancing in an axial distance from its base (88) via bearers (90-92).

6. 3D laser measurement apparatus according to claim 5, **characterized in that** the bearers (90-92) emanate from the pyramid edges.

7. 3D laser measurement apparatus according to claim 5 or 6, **characterized in that** the ring (89) is provided with a plurality of bores (87), which can be individually bored up or filled with weights for balancing.

8. 3D laser measurement apparatus according to any one of the claims 5 to 7, **characterized in that** the base (88) of the mirror pyramid (62, 83, 100) is provided with a plurality of bores (87), which can be individually bored up or filled with weights for balancing.

9. 3D laser measurement apparatus according to any one of the claims 1 to 8, **characterized in that** the mirror pyramid (62, 83, 100) has a metallic base body (100) with gaps, which are spanned over by plane mirrors (76-78).

10. 3D laser measurement apparatus according to claim 9, **characterized in that** the base body (100) has adjustable receivers for the plane mirrors (76-78).

11. 3D laser measurement apparatus according to any one of the claims 1 to 10, **characterized in that** the optical axis (79) of the laser sending beam (19, 66) has a higher radial distance (a,b) from the axis of rotation (75) of the mirror pyramid (62, 83, 100) than the optical axis (84; 85, 86) of the reception beam (19, 66).

12. 3D laser measurement apparatus according to any one of the claims 1 to 11, **characterized in that** the reception beam (19, 66) is split into two beams (85, 86) while striking onto the mirror pyramid (62, 83, 100).

13. 3D laser measurement apparatus according to any one of the claims 1 to 12, **characterized in that** the optical axis of the reception unit is variable in the region between the mirror pyramid and the reception unit in a normal plane with respect to the axis of rotation depending on the scan rate and/or the respectively measured target distance.

14. 3D laser measurement apparatus according to any one of the claims 1 to 13, **characterized in that** there is a pivotable mirror arranged between the reception unit and the mirror pyramid, whose pivot axis runs parallel to the rotation axis of the mirror pyramid, wherein a motor pivots said mirror depending on the scan rate and/or the respectively measured target distance.

15. 3D laser measurement apparatus according to any one of the claims 1 to 14, **characterized in that** the reception unit is adjustably mounted and the adjusting motor preferably comprises a Piezo element.

## Revendications

1. Dispositif de mesure au laser 3D (12), avec
un télémètre laser comprenant un émetteur laser (30, 181) pour l'émission d'un faisceau d'émission (19, 66) sur une cible (13), un dispositif de réception laser (72, 184) pour la réception du faisceau de réception (19, 66) réfléchi par la cible, et un dispositif d'évaluation (56, 107, 180) pour la mesure de la durée de parcours des faisceaux, afin d'en déduire l'éloignement de la cible, et
un dispositif de déviation (62, 83, 100) pour les faisceaux d'émission et de réception (19, 66), comprenant une pyramide de miroirs (62, 83, 100) rotative autour d'un axe (75), au moyen de laquelle un espace de cibles (13) peut être détecté avec au moins un éventail de faisceaux laser (18), afin de créer un nuage de points 3D (113) de l'espace de cibles à partir des éloignements de cibles mesurés, les surfaces (76-78) de la pyramide de miroirs (62, 83, 100) incluant au moins deux angles différents avec l'axe de rotation (75),
**caractérisé en ce que** le dispositif de mesure laser 3D (12) est divisé en un appareil de base (93) et une tête de mesure (94) séparable de l'appareil de base (93) et montée de façon interchangeable sur celui-ci, dans lequel l'appareil de base (93) contient le télémètre laser (30, 181 ; 72, 184 ; 56, 107, 180) et la tête de mesure (94) contient le dispositif de déviation (62, 83, 100), et dans lequel l'appareil de base (93) et la tête de mesure (94) comportent respectivement une fenêtre transparente pour les faisceaux laser (19, 66), lesquelles fenêtres sont alignées dans l'état monté.

2. Dispositif de mesure au laser 3D selon la revendication 1, **caractérisé en ce que** la tête de mesure (94) contient en outre un moteur d'entraînement (95) et un décodeur d'angle (99) pour la pyramide de miroirs (62, 83, 100).

3. Dispositif de mesure au laser 3D selon la revendication 1 ou 2, **caractérisé en ce que** les fenêtres transparentes (97, 98) ferment respectivement de façon étanche l'appareil de base (93) et la tête de mesure (94), de préférence de façon étanche au gaz.

4. Dispositif de mesure au laser 3D selon la revendication 3, **caractérisé en ce que** les fenêtres (97, 98) présentent un effet optique, de préférence en tant que lentilles ou filtres.

5. Dispositif de mesure au laser 3D selon l'une des revendications 1 à 3, **caractérisé en ce que** la pyramide de miroirs (62, 83, 100) porte au moins un anneau (89) à une distance axiale de sa base (88) sur des supports (90-92), pour l'équilibrage.

6. Dispositif de mesure au laser 3D selon la revendication 5, **caractérisé en ce que** les supports (90-92) partent des bords de la pyramide.

7. Dispositif de mesure au laser 3D selon la revendication 5 ou 6, **caractérisé en ce que** l'anneau (89) est pourvu d'une multitude de perçages (87) susceptibles d'être percés individuellement ou d'être remplis avec des poids, pour l'équilibrage.

8. Dispositif de mesure au laser 3D selon l'une des revendications 5 à 7, **caractérisé en ce que** la base (88) de la pyramide de miroirs (62, 83, 100) est pourvue d'une multitude de perçages (87) susceptibles d'être percés individuellement ou d'être remplis avec des poids, pour l'équilibrage.

9. Dispositif de mesure au laser 3D selon l'une des revendications 1 à 8, **caractérisé en ce que** la pyramide de miroirs (62, 83, 100) comporte un corps de base métallique (100) avec des évidements couverts par des miroirs plans (76 - 78).

10. Dispositif de mesure au laser 3D selon la revendication 9, **caractérisé en ce que** le corps de base (100) comporte des admissions réglables pour les miroirs plans (76 - 78).

11. Dispositif de mesure au laser 3D selon l'une des revendications 1 à 10, **caractérisé en ce que** l'axe optique (79) du faisceau d'émission laser (19, 66) présente une plus grande distance radiale (a, b) par rapport à l'axe de rotation (75) de la pyramide de miroirs (62, 83, 100) que l'axe optique (84 ; 85, 86) du faisceau de réception (19, 66).

12. Dispositif de mesure au laser 3D selon l'une des revendications 1 à 11, **caractérisé en ce que** le faisceau de réception (19, 66) est divisé en deux faisceaux (85, 86) lors de son incidence sur la pyramide de miroirs (62, 83, 100).

13. Dispositif de mesure au laser 3D selon l'une des revendications 1 à 12, **caractérisé en ce que** l'axe optique du dispositif de réception peut être réglé dans la région entre la pyramide de miroirs et le dispositif de réception, dans un plan normal par rapport à l'axe de rotation, en fonction de la fréquence de balayage et/ou de l'éloignement de cible mesuré respectivement.

14. Dispositif de mesure au laser 3D selon l'une des revendications 1 à 13, **caractérisé en ce qu'**un miroir pivotant est prévu entre le dispositif de réception et la pyramide de miroirs, dont l'axe de pivotement s'étend parallèlement à l'axe de rotation de la pyramide de miroirs, un entraînement le faisant pivoter en fonction de la fréquence de balayage et/ou de l'éloignement de cible mesuré respectivement.

15. Dispositif de mesure au laser 3D selon l'une des revendications 1 à 14, **caractérisé en ce que** le dispositif de réception est monté réglable et l'entraînement de réglage comprend de préférence un élément piézoélectrique.
